Europäisches Patentamt

(19) European Patent Office

Office européen des brevets

(11) Publication number: **0 072 609**
A1

# (12) EUROPEAN PATENT APPLICATION

(21) Application number: 82303231.3

(22) Date of filing: 21.06.82

(51) Int. Cl.³: **B 23 K 26/00**

(30) Priority: 22.06.81 GB 8119165

(43) Date of publication of application:
23.02.83 Bulletin 83/8

(84) Designated Contracting States:
AT BE CH DE FR GB IT LI NL SE

(71) Applicant: ZED INSTRUMENTS LIMITED
Molesey Avenue
West Molesey Surrey, KT8 0RY(GB)

(72) Inventor: Zollman, Peter Martin
'Langton' Burwood Park
Walton-on-Thames Surrey(GB)

(72) Inventor: Doyle, Keith Gilbert
73 Heathcroft Avenue
Sunbury-on-Thames Surrey(GB)

(74) Representative: Gold, Tibor Zoltán et al,
T.Z.GOLD & COMPANY 9, Staple Inn
London WC1V 7QH(GB)

(54) Improvement in or relating to methods and apparatus for laser engraving.

(57) The laser beam is passed through diffraction means (15), which may be of any suitable form such as a diffraction grating, zone plate or diffraction aperture or a beam shaping mirror, and is then focussed onto the surface of the workpiece in the form of a diffraction pattern. In addition, the workpiece may be moved relative to the laser beam during engraving while preferably also varying the intensity (pulse-shape) of the laser beam to produce the cells of different size and configuration. The disclosure also describes methods and apparatus for engraving an image or pattern on the surface of the workpiece by varying the output of the laser beam in accordance with stored image defining signals to produce cells of uniform or different size and shape while scanning the workpiece surface.

FIG.1

Croydon Printing Company Ltd

## IMPROVEMENT IN OR RELATING TO METHODS AND APPARATUS FOR LASER ENGRAVING

This invention relates to methods and apparatus for laser engraving and is particularly, though not exclusively concerned with such methods and apparatus for engraving inking rollers or plates for printing presses and printing plates or cylinders for gravure printing and the like.

When engraving inking rollers for printing presses, the desired variation in the tone of the image or pattern to be reproduced is achieved by varying the spatial density and/or size of individual depressions or cells formed in the otherwise smooth surface of the inking roller. In the most common technique the spatial frequency of the cells is uniform over the surface of the roller. In the case of gravure printing cylinders the ink-carrying capacity of the cells is varied by varying their area and depth in order to produce the desired variations in tone in the printed image. Whichever technique is needed, it is desirable for certain applications to have cells of rectangular, diamond, hexagonal or other non-circular shapes. In particular, a diamond-shape is preferred in order to maximise cell area while maintaining separating walls around each cell of, preferably, uniform and

-2-

small thickness; and also, in order to ensure even wear under the effect of, and support for, the usual doctor blade that is moved over the cells to remove excess ink.

At present, non-circular cells are commonly produced mechanically or by chemical etching through a suitably exposed photoresist coating. It has only been possible to engrave by laser such non-circular cells by carrying out a number of passes of a pulsed laser beam through each cell and varying the duration and possibly also the power of the laser pulse applied to the laser cell on each pass. This is because the spot produced by a focussed laser beam is inherently circular.

According to a first aspect of the present invention depressions or cells are formed in the surface of a work-piece by passing a laser engraving beam through diffraction means and ocussing the laser beam onto the said surface in the form of a diffraction pattern.

The beam may pass through the diffraction means before or after passing through the optical system for focussing the beam on to the work-piece surface preferably at a point remote from the focal plane of the optical focussing system.

The diffraction means may be of any suitable form selected to produce a diffraction pattern of a desired shape or configuration. The diffraction means may be arranged to produce a closely confined diffraction pattern such that pits engraved by individual elements of the pattern overlap to produce in effect a cell or depression having a shape dependent upon the configuration of the diffraction pattern. Alternatively, the diffraction means may be such as to produce a pattern in which individual elements or dots of the pattern are spaced apart, enabling a plurality of separate depressions or cells to be engraved simultaneously.

The diffraction means may comprise a grid or grating in which the grid or grating lines may all simply be parallel, or may be oriented at different angles. Alternatively zone plates suitably shaped apertures or masks, or transparent optical elements in which the diffracting effect is produced by variation in its thickness may be used.

To obtain a greater degree of flexibility in the shapes of cells that can be formed, the workpiece may be moved relative to the laser beam during the engraving process, preferably in conjunction with a controlled variation in the intensity of the laser beam.

Preferably the laser beam is a pulsed laser beam, and it will be apparent that a variety of cell shapes can be engraved with a selected diffraction pattern from a single output pulse of the laser by varying the duration of the pulse, the intensity of the pulse within the pulse duration (i.e. the pulse shape) and the speed and direction of relative movement between the laser beam and the workpiece. Alternatively, typically for larger cell sizes, a single cell may be built up from a number of "passes" of the laser beam.

The invention may be used in a wide variety of laser engraving applications particularly though not necessarily where it is desirable to form non-circular holes or depressions or cells in a workpiece without the need to use repeated applications of the laser beam in forming each cell. One such application to which the invention is particularly suited is in the laser engraving of inking plates or rollers for printing presses and printing (gravure) plates and cylinders in which, as stated above, it is desirable to have cells that are non-circular in shape. In addition, for gravure surfaces the cells may need to be a in size over the surface of the plate or roller in accordance with an image to be produced and this may readily be achieved using the present invention simply by varying the peak power of the laser pulse used to form each cell. The invention may equally be applied to the engraving of, for example, inking roller and plates, in which the cell size may be uniform throughout the surface, individual cells being formed either from single or multiple passes or pulses of the laser beam.

According to a second aspect, the present invention provides apparatus adapted to carry out the above methods and comprising means for producing a laser beam, diffraction means disposed in or movable into and out of the path of the laser beam, and means for focussing the laser beam onto the surface of a workpiece in the form of a diffraction pattern.

Substantially any conventional form of laser engraving apparatus may be adapted to carry out the methods as aforesaid by the insertion of diffracting means in the path of the laser beam at a point remote from the focal plane of the optical system used to focus the beam onto the workpiece.

The invention will now be described in greater detail, by way of example only, with reference to the accompanying drawings in which:

Figure 1 is a schematic perspective view of laser engraving apparatus embodying the present invention;

Figure 2(a) is a schematic illustration of a non-circular depression or cell engraved by the laser engraving apparatus shown in Figure 1; and

Figure 2(b) is a graph of the laser output signal used to produce the cell illustrated in Figure 2(a).

-6-

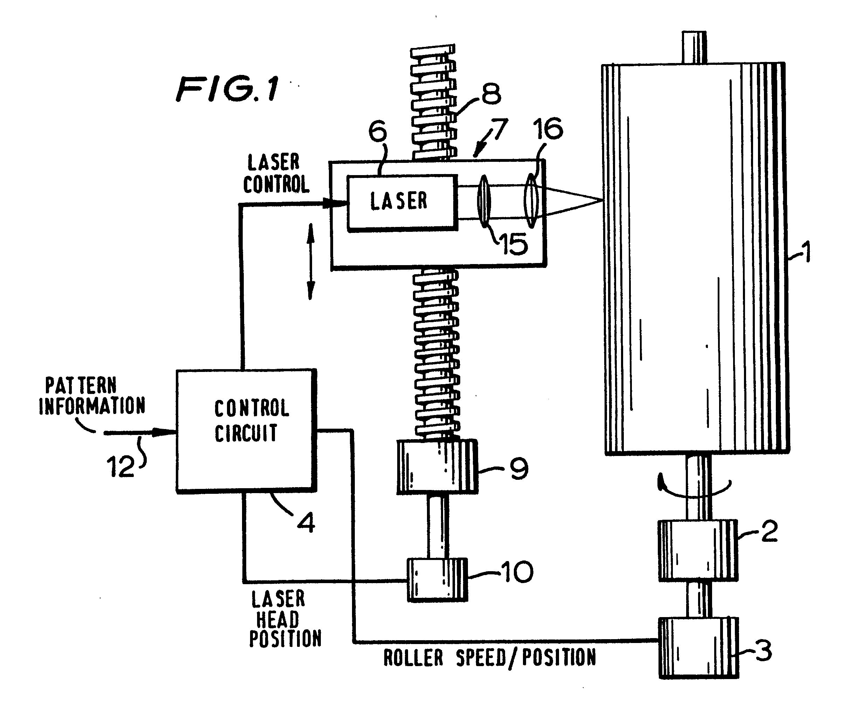

Referring to the drawings, the apparatus shown in Figure 1 comprises a laser engraving system for engraving the surface of an inking roller 1 for a printing press. The roller 1 is arranged to be rotated at a constant speed by a drive means 2 and information regarding the instantaneous position of the roller 1 is provided by a shaft position encoder 3 to a control circuit 4.

A laser 6 is mounted within an engraving head 7 which is arranged to be moved in a direction parallel to the axis of rotation of the roller 1 by means of a lead screw 8 which is driven by drive means 9 associated with a position encoder 10 to provide information to the control circuit 4 regarding the instantaneous position of the engraving head 7. The control circuit 4 also receives via input 12 information regarding the pattern or image to be engraved on the surface of the roller 1, and is arranged in known manner to control the output of the laser 6 in conjunction with the synchronised movements of the laser head 7 and the roller 1 to reproduce an engraved pattern on the surface of the roller 1 in accordance with said pattern information received at input 12.

Typically, the pattern information comprises signals indicative of the tone or optical intensity level of each of a series of areas or points of the image to be copied which may be generated by scanning the image with an optical sensor in a series of vertical lines indexed across the width of the image. Alternatively, the image or pattern information may be already stored in a memory. This scanning sequence is then repeated by the laser engraving apparatus by the combined rotation of the roller 1 and indexing the laser engraving head 7 by a distance corresponding to one line width for each revolution of the roller 1, while the laser 6 is controlled in dependence upon the optical density level of the corresponding point or area on the original image. Scanning techniques of this kind are well known in the art and accordingly, need not be described in greater detail here.

As stated above, the pattern information received at input 12 of the control circuit 4 comprises a sequence of signals each representing the optical tone or density level of a discrete point in the original image. In the present embodiment each such signal is used to control the output of the laser 6 to engrave at an appropriate point on the surface of the roller 1 a single depression or cell, having an ink-carrying capacity corresponding to the value of the optical density level indicated. The ink-carrying capacity of such a cell is dependent upon its shape, depth, and area.

Desirably, also, the shape of such cells should be non-circular for the reasons already stated.

In accordance with the present invention, the laser engraving head 7 includes a diffracting element 15 disposed in a plane remote from the focal plane of an optical system 16 for focussing the beam from the laser 6 onto the surface of the roller 1 which corresponds to the Fraunhofer diffraction pattern of the diffracting element 15. As shown, the diffracting element 15 simply comprises a grid of parallel wires, the Fraunhofer diffraction pattern of which consists of a row of dots whose spacing depends upon the periodic spacing of the wires of the grid - the smaller the spacing, the more widely spaced the dots.

Using a pulsed $CO_2$ laser 6 and a grid of wires 1 mm in diameter spaced at 4 mm centres, a diffraction pattern in which the spacing of the dots centres is of the order of 100 microns can be produced on the surface of the roller 1. The intensity of these dots decreases outwardly from a central dot having the greatest intensity. If this pattern is directed onto the surface of a moving roller 1 the result will be a series of parallel grooves engraved in the surface of the roller, these grooves overlapping one another due to their close proximity.

The length of the grooves will depend upon the duration of the laser pulse in relation to the speed of rotation of the roller 1. Further, the number of grooves actually engraved will depend upon the intensity of the laser beam, since increases in the laser intensity will cause an increasing number of the outer (lower order) dots of the diffraction pattern to engrave with the depth of the engraved grooves decreasing outwardly from the central groove. Accordingly, variation of the laser intensity will vary the width of the groove pattern and of the cell produced.

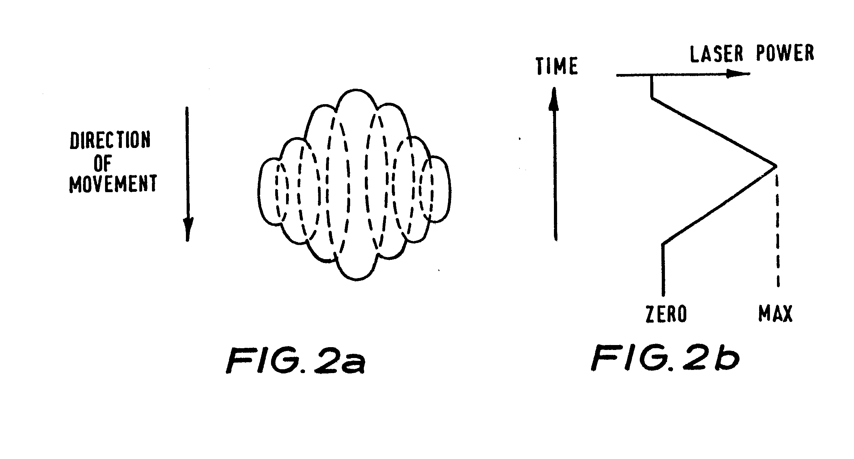

Referring now to Figures 2(a) and 2(b), an approximately diamond-shaped cell as shown in Figure 2(a) can be produced in the surface of the roller 1 by ramping the laser power up and down to produce a triangular pulse shape as shown in Figure 2(b). Correspondingly an approximately hexagonal-shaped cell may be produced using a trapezoidal laser pulse, while a square laser pulse shape would be used to produce a rectangular or square-shaped cell. It will also be apparent that a wide variety of cell shapes can be produced using diffraction elements which produce different diffraction shapes and different directions and rates of relative movement between the diffraction pattern and the engraved surface.

-10-

Variations in the peak power density of the laser beam from pulse-to-pulse in dependence upon said information signals indicating the optical density variations of the scanned original image, causes corresponding variations in the ink-carrying capacity of the engraved cells on the roller 1. This is effected by the control circuit 4 in known manner, although the exact variation in the laser power in response to a given variation in the optical density level of the original image required to accurately reproduce the original image may vary depending upon the particular cell shape used.

Typically, the apparatus described above can produce a diamond-shaped cell having a width roughly equal to its length of approximately 300 microns and a maximum depth at centre of 200 microns on the surface of an inking roller of laser-engravable, e.g. thermoplastic, material moving at 1 m/sec using a triangular $CO_2$ laser pulse of 300 microseconds duration and a peak power density of $5 \times 10^{-6}$ watts/ $cm^2$.

Similar techniques may also be used to engrave single cells of controlled shape and contour from a number of passes of the laser beam. For example, a triangular cell having a pyramid contour may be "built up" from a number of successive closely adjacent passes or scans of the laser beam by progressively increasing then decreasing the duration and also peak power of the laser pulses from one side of the cell to the other. Variations in the pulse durations of successive passes can be used to vary the external shape of the cell and variations in the pulse power and shape during successive passes will alter the depth and contour respectively of the resulting cell. This technique is particularly suitable for engraving inking rollers in which the cell size is usually uniform over the surface of the roller. Stored pattern information for controlling the engraving beam during each scan then comprises information relating to the desired depth of each cell at a number of points along the length of the scan, which in turn controls the laser pulse shape and power needed to produce the required cell contour. Thus there may be several bits of pattern information within that for each of the number of scans of the laser beam required to produce each cell, the number of bits being a function of the required dimensions of the relevant slice of the cell in the direction of relative movement between the workpiece and the laser beam.

As discussed above, reducing the periodic spacing of the wires of the diffracting grid 15 increases the spacing between the individual dots of the Fraunhafer diffraction pattern produced.

Thus, by using a suitably fine diffracting grid which produces a diffraction pattern of non-overlapping spots, a number of cells or depressions can be produced simultaneously in the surface of the roller 1 or any other workpiece, although of course the cell engraved by each such dot will be no different in shape to that produced by a conventional focussed laser spot.

It will be apparent that diffraction elements other than wire grids may be used, e.g. modified forms of grid which have opaque sections oriented at various angles, zone plates, suitably-shaped apertures or masks and transparent optical elements the thickness of which varies in a controlled manner to produce the diffraction effect.

In the case of masks, these are preferably located between the focussing means and the workpiece at a point sufficiently remote from the workpiece such that the power density of the beam is acceptably low.

Furthermore, the invention may also be used for engraving gravure or similar printing plates, whether flat or cylindrical. Indeed the invention may be applied in any laser engraving application where it is desirable either to produce small holes or cells of non-circular shape in the surface of a workpiece or to simultaneously form a plurality of holes or cells in the surface of a workpiece.

The invention however is not solely concerned with the formation of non-circular cells. It is often desirable to produce a beam of non-circular cross-section or power distribution in order to produce a circular cell on a moving workpiece. A circular beam with a finite exposure would produce an elliptically or even more elongated trace on a moving workpiece. A limited elongation of this nature can be compensated by an elliptical cross-section laser beam of complementary shape.

As an alternative to, or possibly in addition to, diffraction patterns for providing non-circular laser spots, are suitably profiled e.g. non-planar or non-spherical mirrors. In the simplest example, a cylindrical mirror will reflect a non-circular beam cross-section into an elliptical beam. Such an elliptical beam may be employed for the compensation referred to above, or to form cells of controlled shape either on its own or in combination with variations in the laser power, pulse waveform and relative movement between the laser beam and the workpiece.

CLAIMS

1.    A method of forming depressions or cells in the surface of a workpiece using a laser engraving beam, characterised in that the laser engraving beam is passed through diffraction means (15) and focussed onto the surface of the workpiece (1) in the form of a diffraction pattern.

2.    A method as claimed in Claim 1, characterised in that the laser beam is passed through the diffraction means (15) at a point remote from the focal plane of the optical focussing means (16).

3.    A method as claimed in Claim 1 or Claim 2, characterised in that the laser beam is focussed onto the workpiece in the form of a closely confined diffraction pattern such that the pits engraved by the individual elements of the pattern overlap to produce in effect a cell or depression having a shape dependent upon the configuration of the diffraction pattern.

4.    A method as claimed in claim 1 or claim 2, characterised in that the laser beam is focussed onto the workpiece (1) in the form of a diffraction pattern in which the individual elements of the pattern are spaced apart to engrave a plurality of separate cells in the surface of the workpiece simultaneously.

5.      A method as claimed in any preceding Claim, characterised in that the diffraction means (15) comprises a diffraction grid or grating.

6.      A method as claimed in any preceding claim, characterised in that the workpiece (1) is moved relative to the laser beam during engraving whereby to elongate the cell(s) thereby produced in the direction of said relative movement.

7.      A method as claimed in any preceding Claim, characterised in that the laser beam is a pulsed laser beam and the intensity thereof within the duration of the pulse is varied whereby to control the contour of the cell(s) produced in the workpiece surface.

8.      A method as claimed in Claim 7, in which the workpiece is moved relative to the laser beam during engraving, the method comprising focussing the laser beam onto the workpiece in the form of a row of closely spaced dots aligned in a direction perpendicular to the direction of said relative movement, the intensity of said dots decreasing outwardly from the centre towards the ends of the row, and varying the intensity of the laser beam within the pulse duration to produce an output laser pulse of controlled waveform whereby to produce a cell in the surface of the relatively moving workpiece
of a desired configuration.

9. A method of engraving a printing or inking
plate or roller so as to reproduce an image or
pattern thereon defined by image-defining signals
representing the required engraving depth, or the
optical tone or density of elemental areas of the
workpiece surface; comprising moving the surface of
the printing roller or plate (1) relative to a
laser engraving beam; and laser engraving by a
method as claimed in any one of Claims 1 to 5,
a cell or part of a cell as required in respective
elemental areas of the surface of said roller or
plate (1) using said image-defining signals to
control the intensity of the laser beam in
accordance with the said required engraving depth
or optical tone or density.

10. Apparatus for forming depressions or cells
in the surface of a workpiece comprising laser means
for producing a laser engraving beam and
characterised by diffraction means (15) disposed
in or movable into and out of the path of the laser
beam and focussing means (16) for focussing the
laser beam onto the surface of the workpiece (1)
in the form of a diffraction pattern.

11.    Apparatus as claimed in Claim 10 characterised
in that the diffraction means (15) is disposed or
movable into and out of the path of the laser beam
at a point remote from the focal plane of the
focussing means.

12.    Apparatus as claimed in Claim 10 or Claim 11,
characterised in that the diffraction means comprises
a diffraction grating or grid.

13.    Apparatus as claimed in Claim 10, 11 or 12
characterised in that the diffraction means is such
and is so disposed as to produce a closely confined
diffraction pattern on the surface of the workpiece
whereby the pits engraved by the individual elements
of the diffraction pattern overlap to produce a
cell or depression having a shape dependent upon
the configuration of the diffraction pattern.

14.    Apparatus as claimed in Claim 10,11 or 12
characterised in that the diffraction means (15)
is such and is so disposed as to produce on the
surface of the workpiece (1) a diffraction
pattern in which the individual elements of the
pattern are spaced apart whereby to engrave a plurality
of separate cells in the surface of the workpiece
simultaneously.

15.    Apparatus as claimed in any one of claims
10 to 14, characterised in that it includes means
(2, 9) for causing relative movement
between the workpiece and the laser means during
engraving whereby to form in the surface of the work-
piece cells or depressions elongated in the direction
of said relative movement.

16.    Apparatus as claimed in any one of Claims
10 to 15, characterised in that the laser means
(6) comprises pulsed laser means, and the
apparatus includes means for varying the intensity
of the laser means within the pulse duration to
control the contour of the cells formed in the
surface of the workpiece.

17.    Apparatus for engraving a printing or
inking plate or roller so as to reproduce thereon
an image or pattern defined by image-defining
signals representing required engraving depth or the
tone or optical density of elemental areas of the
plate or roller surface; said apparatus comprising
laser engraving apparatus (6, 15, 16) as claimed
in any one of Claims 10 to 14, for engraving cells
in the surface of said printing plate or roller;
means (2, 9) for causing relative scanning movement
between the plate or roller and the laser engraving
apparatus whereby to scan each of the said elemental areas;

and laser control means (4) responsive to said
image-defining signals for controlling the
output intensity of said laser engraving
apparatus whereby to produce in said elemental
areas of the workpiece a cell or part of a cell,
the size of which corresponds to the said required
engraving depth, or tone or optical density.

18.    A method of laser engraving the surface of
a workpiece to form cells or depressions therein
characterised in that the cross-sectional shape
of the laser beam is controlled by reflection means
to produce a laser spot on the surface of the
workpiece of a desired shape.

FIG.1

LASER CONTROL

LASER

6
8
7
16
15
1

PATTERN INFORMATION

CONTROL CIRCUIT

12
4

LASER HEAD POSITION

9
10

ROLLER SPEED/POSITION

2
3

1/2

0072609

DIRECTION
OF
MOVEMENT

TIME

LASER POWER

ZERO          MAX

FIG.2a

FIG.2b

## European Patent Office

## EUROPEAN SEARCH REPORT

**0072609**
Application number

EP 82303231.3

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | <u>GB - A - 1 371 624</u> (UNITED KINGDOM ATOMIC ENERGY AUTHORITY) <br> + Totality + <br> -- | | B 23 K 26/00 |
| A | <u>GB - A - 1 576 460</u> (LASAG) <br> + Totality + <br> -- | | |
| A | <u>US - A - 4 081 653</u> (KOO) <br> + Totality + <br> ---- | | |

**TECHNICAL FIELDS SEARCHED (Int.Cl. 3)**

B 23 K 26/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X | The present search report has been drawn up for all claims

| Place of search | Date of completion of the search | Examiner |
|---|---|---|
| VIENNA | 07-09-1982 | BENCZE |

EPO Form 1503.1   06.78